# EUROPEAN PATENT APPLICATION

(11) **EP 2 199 628 A1**
(43) Date of publication of application: **23.06.2010**
(21) Application number: 09179711.8
(22) Date of filing: 17.12.2009
(51) Int. Cl.: F16B 19/10, B60R 21/213

(54) **Fastener**

(30) Priority: 18.12.2008 JP 2008322628
(71) Applicant: Newfrey LLC, Newark, Delaware 19711 (US)
(72) Inventor: Sano, Takahiro, Toyohashi-shi Aichi (JP)
(74) Representative: Haar, Lucas Heinz Jörn

(57) **Abstract**

A fastener 1 that strengthens the force of resistance against a bushing being pulled away from a body panel 6 is comprised of two parts, namely a pin 2 having a head 7 and a pin shank 9, and a bushing having a flange 13 and a bushing shank 14, in which bushing shank 14 is provided a pair of elastic latching pieces 15, each of which elastic latching pieces 15 has a latching shoulder 22 that extends outward in lateral directions, in each of which elastic latching pieces 15 is formed an inward extending part 23 that extends outward toward the center at an inward position corresponding to the latching shoulder 22, wherein the pin shank 9, passed through the bushing shank 14, comes up against the inward extending parts 23 and pushes the inward extending parts out to the outside in lateral directions, the latching shoulders 22 are made to protrude to the outside in lateral directions, and the force by which the latching shoulders 22 latch the edge of an attachment hole in a body panel 6 is strengthened.

## Description

### Technical Field

The present invention relates to a fastener that can be used for attaching an attaching member, such as a curtain side air bag, to a workpiece, such as a body panel of a vehicle body, where a very strong holding force is required.

### Background of the Invention

A fastener that can be used for attaching an attaching member, such as a curtain side air bag, to a workpiece where a very strong holding force is required, is described in JP 2005-047325 A. This fastener comprises two parts, namely a pin with a head and a pin shank extending from the head, and a bushing with a flange and a bushing shank extending from the flange. A hole is provided an the flange for accepting the pin shank, and in the bushing shank, a space is provided for accepting the pin shank that has passed through the hole. In the bushing shank, a pair of elastic latching pieces is provided, which pieces extend outward in lateral directions from the free end of the bushing shank toward the flange to positions adjacent to that flange, so as to be in opposition with the space in between. Each of the elastic latching pieces has a latching shoulder for latching on the edge of the attachment hole of the workpiece, formed in a portion that extends outward in said lateral directions. The latching shoulders latch on the edge of the attachment hole in the workpiece, so that the workpiece is clamped between the flange and the elastic latching pieces when the bushing shank is inserted into the attachment hole of the workpiece. When the pin shank is inserted into the bushing shank, the latching shoulders of the elastic latching pieces extend outward in lateral directions and the holding force is strengthened. Between the elastic latching pieces and the flange, the holding part of an attaching member such as a curtain side air bag and the workpiece such as a body panel are clamped, and both members are connected. A fastener capable of securing an air bag to a body panel is also described in JP 2006-161890 A.

### Summary of the Invention

### Problems to be Solved by the Invention.

The fasteners described in JP 2005-047325 A and JP 2006-161890 A exhibit a very strong holding force. When the pin shank is inserted into the bushing shank, the condition in which the elastic latching pieces of the bushing shank are extended outward in lateral directions is maintained by the pin shank, so that the elastic latching pieces are prevented from being pulled inward into the bushing shank, and the bushing is prevented from being pulled out of the workpiece. Nevertheless, with the fasteners of JP 2005-047325 A and JP 2006-161890 A, the pin shank is only configured to prevent the elastic latching pieces of the bushing shank from flexing inward.

JP 04-113012 A describes a two-part fastener which comprises a pin and a bushing. The pin has a pin shank of a special shape which has a wide-diameter portion in the middle. The tip ends of elastic latching pieces in the bushing shank are mated into a circumferential groove in the wide-diameter portion, and a condition in which the elastic latching pieces of the bushing shank are protruded to the outside in lateral directions is maintained. In this fastener also, there is only a configuration to prevent the elastic latching pieces of the bushing shank from flexing inward.

Accordingly, an object of the present invention is to provide an improved fastener wherein the force for resisting the bushing's pulling out from a workpiece, that is, the pull-out resisting force, is strengthened.

### Means for Solving the Problems

In order to attain the object noted above, according to the present invention, a fastener is provided that comprises two parts, namely: a pin having a head and a pin shank extending from that head; and a bushing having a flange and a bushing shank extending from that flange; in its flange, a hole is provided for accepting the pin shank; in its bushing shank a space is provided for accepting the pin shank which has passed through the hole; said fastener is secured to a workpiece by the pin shank being inserted into the hole and the space; and a pair of elastic latching pieces is provided in the bushing shank, which pieces extend outward in lateral directions from the free end of the bushing shank toward the flange to positions adjacent to that flange so as to be in opposition with the space in between; each of said elastic latching pieces has a latching shoulder for latching on the edge of an attachment hole of the workpiece, formed in a portion that extends outward in the lateral directions; said elastic pieces are shaped so as to latch on the edge of the attachment hole of the workpiece, so that when the bushing shank is inserted into the attachment hole of the workpiece, the workpiece is clamped between the flange and the elastic latching pieces; at the elastic latching pieces, respectively, on the space side, in the portion that is at a position corresponding to the latching shoulder, an inward extending part is formed, which extending part extends out toward the center of said space in the condition in which the pin shank is not inserted into that space; and the pin shank which is inserted and passed through the space can come up against the inward extending parts, by which action said inward extending parts are pushed out to the outside in lateral directions; so that the latching shoulder portions are made to protrude to the outside in lateral directions and the force whereby the latching shoulders latch on the edge of the attachment hole of the workpiece is strengthened.

As described above, in each of the elastic latching pieces of the bushing shank, inward extending parts are formed which extend outward toward the center of the space at positions inward corresponding to the latching shoulder, the pin shank, [when] inserted into the space, comes up against the inward extending parts thereof, and the inward extending parts are then pushed out to the outside in lateral directions, the latching shoulder portions are caused to protrude farther to the outside in lateral directions, and the force by which the latching shoulder latches on the edge of the attachment hole of a workpiece is strengthened. Accordingly, the force that resists the bushing's pulling out from the workpiece, that is, the pull-out resisting force, is strengthened.

In the fastener described above, the inward extending parts of the pair of elastic latching pieces are in opposition across a gap, in the condition wherein the pin shank is not inserted into that space; and the gap is of a such width that, when the bushing shank is inserted into the attachment hole of the workpiece, the latching shoulders can flex inward in lateral directions until the attachment hole is passed through. In this way, so long as the fastener is in a condition in which the pin shank has not come up against the inward extending parts of the elastic latching pieces of the bushing shank, the bushing shank can be inserted smoothly into the attachment hole of the workpiece. The inward extending parts of the elastic latching pieces are formed in an undercut shape by an undercut molding process, and, by these inward extending parts, the width of the space between the elastic latching pieces is narrowed. Here, by "undercut molding process" is meant the molding of convex or concave shapes which, in that as-is condition, when such molded products are being removed from metal dies in the course of molding plastic products or the like, are difficult to remove in the direction of die opening; by "undercut shape" is meant a convex or concave shape that is difficult to remove in that direction of die opening. In most cases in an "undercut molding process," molding is done after dividing the metal die and providing a slide, but in other cases, desired undercut shapes are molded by changing the direction of opening of the metal die or the like. By employing an undercut molding process, the inward extending parts can be molded easily and without fail. The inward extending parts described above are molded convex shapes.

In the fastener described above, in the pin shank and in either the bushing shank or the flange, latching means are provided for effecting a provisionally latched condition with the pin and the bushing connected in a condition where the pin shank, inserted into the space, has not reached the inward extending parts of the elastic latching pieces. In this way, the fastener comprising two parts can be handled as one part, and the work of attaching the workpiece and the attaching member is facilitated. When the pin shank in the provisionally latched condition is pushed farther into the space in the bushing shank, the inward extending parts of the elastic latching pieces are pushed out to the outside in lateral directions, resulting in a fully-latched condition in which the clamping of the workpiece by the flange and the latching shoulders of the elastic latching pieces is maintained. In this way, the fastener attachment operation is facilitated. Also, in the pin shank and in the flange or the bushing shank, latching means are provided for maintaining a condition in which the pin is connected to the bushing in the fully-latched condition.

### Brief Descriptions of the Drawings

The invention will be further described in conjunction with the accompanying drawings, which illustrate a preferred (best mode) embodiment, and wherein:
Fig. 1 is a plan of a fastener relating to one embodiment of the present invention.
Fig.2 is a front elevation of the fastener as shown in Fig. 1.
Fig. 3 is a bottom view of the fastener as shown in Fig. 2.
Fig. 4 is a section at the A-A line of the fastener as shown in Fig. 1.
Fig. 5 is a section at the B-B line of the fastener as shown in Fig. 2.
Fig. 6 is a section that is the same as that in Fig. 4, but with the attachment hole of the attaching member latched by a spacer.
Fig. 7 is a section of the fastener as shown in Fig. 6, during attachment thereof to the workpiece.
Fig. 8 is a diagram representing the operation of attaching an attaching member to a workpiece with the fastener as shown in Fig. 7.

### Detailed Descriptions of the Drawings

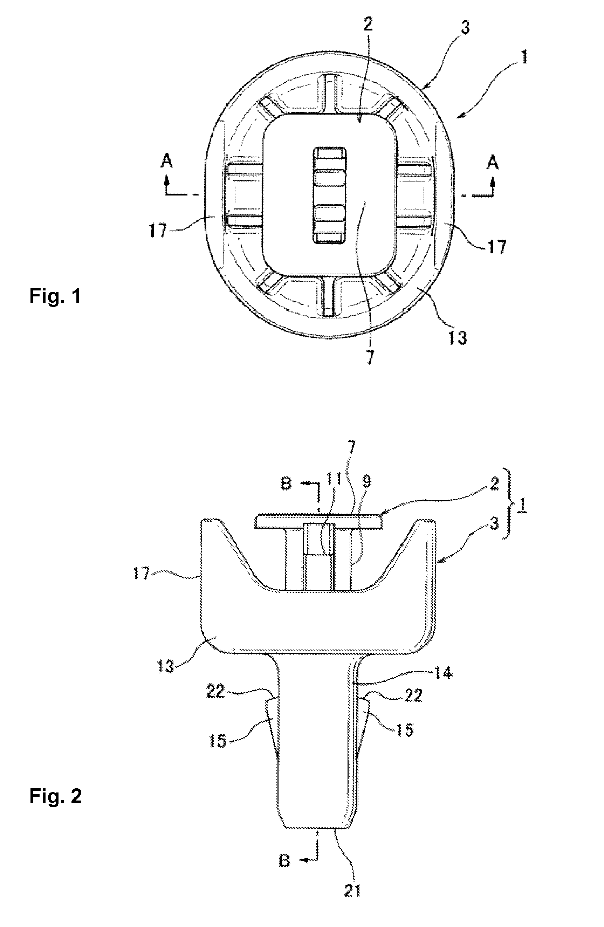

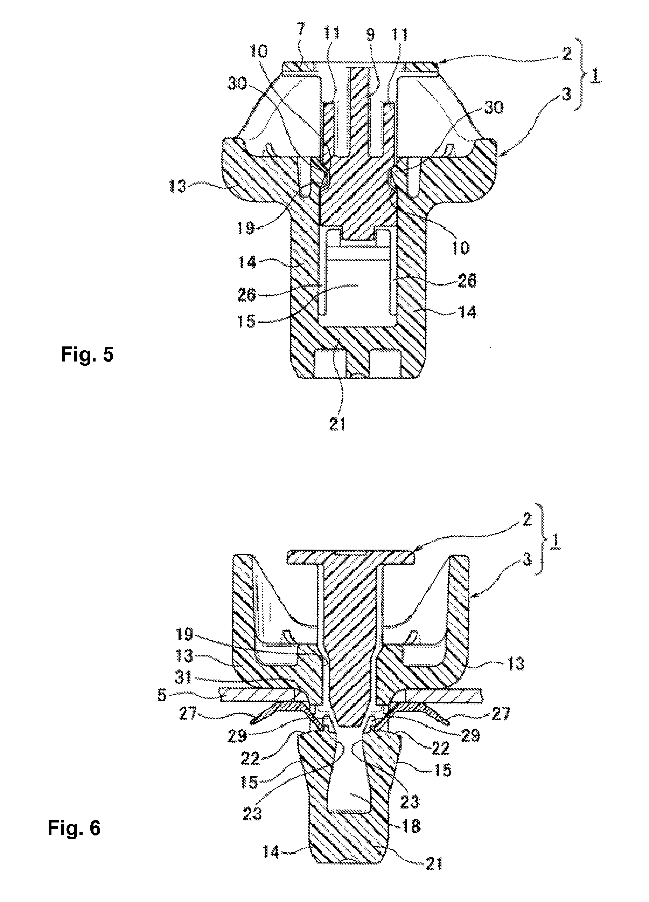

A fastener 1 relating to one embodiment of the present invention shall now be described with reference to the drawings. In Figs. 1 to 5, a fastener 1 comprising two parts, namely a pin 2 and a bushing 3, are represented in the condition wherein the two parts are provisionally connected. In Figs. 6 to 8, a series of operations is shown whereby the fastener 1 is provisionally latched to an attachment part 5 of a curtain side air bag as an attaching member, and wherein the provisionally latched fastener 1 is finally latched to a workpiece that is a body panel.

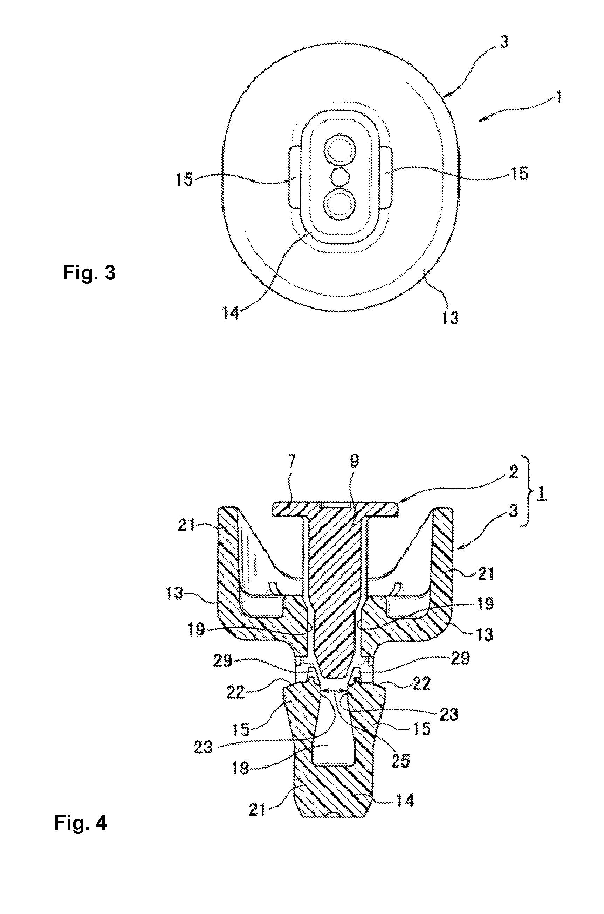

First, with reference to Figs. 1 to 5, the pin 2 that is one part of the fastener 1 and the bushing 3 that is the other part are described. The pin 2 and the bushing 3, respectively, are integrally molded plastic moldings. The pin 2 comprises a head 7 that is substantially shaped as a rectangular panel and a pin shank 9 extending from the center of the head 7. The upper surface of the head 7 is formed flat to make it easy for a worker to push the pin 2 into the bushing 3. The pin shank 9 is formed in a rigid rod shape that can be inserted into a hole in a flange of the bushing 3 and into a space formed in the center of the bushing shank. As shown in Figs. 4 and 5, the pin shank 9 is formed so as to extend a certain length from the head 7, which length is determined at a length by which, when inserted completely into the space in the bushing 3, the pin shank can come up against inward extending parts of elastic latching pieces of the bushing 3 and cause them to extend outward in lateral directions. As shown in Fig. 5 latching recesses 10, for latching in latching pawls of the bushing 3 in the provisionally latched condition, and latching parts 11, for latching with the latching pawls of the locking device 3 in the fully latched condition, are formed In the pin shank 9. As shown in Fig. 4 the pin shank 9, after extending with wider diameter for a certain length downward from the head 7, extends with narrower diameter to the free end thereof while occupying the space between the inward extending parts of the elastic latching pieces of the bushing shank, so as to be easily insertable.

In the condition in which the pin 2 is provisionally latched in the bushing 3, the inward extending parts of the elastic latching pieces of the bushing shank are in a condition in which they can flex so as to enter inside the space in the bushing shank, and, merely by the simple operation of then inserting the bushing shank of the bushing 3 into the attachment hole of the attachment part 5 of the curtain side air bag, the fastener 1 can easily be provisionally latched to the attachment part 5 of the curtain side air bag. In the provisionally latched condition, the latching pawls of the bushing shank mate in the latching recesses 10 of the pin shank 9 to maintain the provisionally latched condition. In the fully latched condition, the pin shank 9, upon being sufficiently inserted into the space in the bushing 3, comes up against the inward extending parts of the elastic latching pieces of the bushing 3, causing the inward extending parts to protrude to the outside in lateral directions and causing the latching shoulders of the elastic latching pieces to protrude to the outside in lateral directions. In the fully latched condition, the latching pawls of the bushing shank engage with the latching parts of the pin shank to maintain the fully latched condition. The pin shank 9 consists of a rigid rod-shaped body, so that, in order to be moved from the provisionally latched condition to the fully latched condition, it is only necessary to push in the head 7, which can be done easily with a light force pushing inward.

The bushing 3 that is the other part of the fastener 1 will now be described. The bushing 3 has a flange 13 and a bushing shank 14 that drops downward from the flange 13. The bushing shank 14 is inserted into the attachment hole of the attachment part 5 of the curtain side air bag and into the attachment hole of a body panel 6. The flange 13, which is formed as a rigid elliptical or oval plate in order to make flush contact with the attachment part 5 of the curtain side air bag that is the workpiece, works in cooperation with the elastic latching pieces 15 (described subsequently) of the bushing shank 14 to clamp the workpiece. In the flange 13, a pair of upright walls 17 is formed. These upright walls 17 extend to substantially the same height as the head 7 that, in the condition wherein the pin 2 and bushing 3 are provisionally latched, extends out in the axial direction from the surface of the flange 13. The pair of upright walls 17 is formed so as to be separated by an interval, in order to prevent the pin 2, in the provisionally latched condition, from being inadvertently pushed into the bushing 3 but also in order not to hinder the pin 2 from being pushed into the bushing 3 in order to be fully latched. By the upright walls 17 being so formed, the strength of the flange 13 is greatly enhanced, and the strength of attachment to the workpiece is maintained at a high level. As a consequence, the flange 13 can be preventing from failing, even when a strong force acts on the flange 13 when a curtain side air bag deploys instantaneously.

In the bushing shank 14, elastic latching pieces 15 are provided which extend diagonally from the free end thereof (the lower end in Figs. 2, 4, and 5) toward the flange 13, so as to elastically extend outward in lateral directions at positions adjacent to the flange 13; said elastic latching pieces 15 are provided in a pair so as to be in opposition, with a space 18 in the bushing shank 14 in between. In the flange 13, a hole 19 is formed in which the pin shank 9 can be inserted, the bushing shank 14 is formed so as to be hollow, and the hollow portion becomes the space 18 into which the pin shank 9 is inserted. The free end 21 of the bushing shank 14 is formed as a rigid part that closes the space 18 to maintain high strength.

In the portion that extends outward in lateral directions, each of the elastic latching pieces 15 has latching shoulders formed for latching on the edge of the attachment hole in the workpiece. The latching shoulders 22 are formed in shapes that will latch on the edge of the attachment hole in the workpiece so that when the bushing shank 14 is inserted into the attachment hole in the workpiece, they clamp the workpiece between the flange 13 and the elastic latching pieces 15. In the elastic latching pieces 15, respectively, in the portions that are at positions corresponding to the latching shoulders 22 on the space 18 side, inward extending parts 23 are formed which extend out toward the center of the space 18 (i.e. the center axis of the bushing shank 14) when the pin shank 9 has not been inserted into the space 18. The inward extending parts 23 are formed so that the pin shank 9, when inserted into the space 18, can come up against them, by which action the inward extending parts 23 are pushed out to the outside in lateral directions, and the latching shoulder 22 portions, in response thereto, are caused to protrude farther to the outside in lateral directions. In this way, the force by which the latching shoulders 22 latch on the edge of the attachment hole of the workpiece is strengthened. As a consequence, the force resisting pulling the bushing 3 away from the workpiece, that is, the pull-out resisting force, is strengthened.

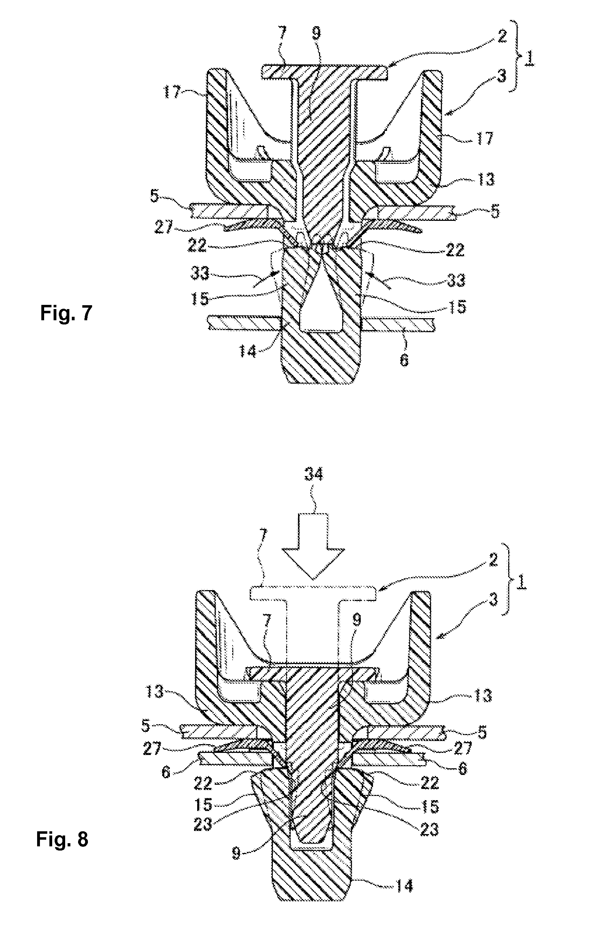

The inward extending parts 23 of the pair of elastic latching pieces 15 are in opposition across a gap 25 (Fig. 4) when the fastener is in the condition where the pin shank 9 has not been inserted into the space 18. The gap 25 is of a width that, when the bushing shank 14 is inserted into the attachment hole of the workpiece, makes it possible for the latching shoulders 22 to flex inward in lateral directions until the attachment hole can be passed through (cf. Fig. 7). In this way, so long as the condition is such that the pin shank 9 is not up against the inward extending parts 23 of the elastic latching pieces 15 of the bushing shank 14, the bushing shank 14 can be inserted smoothly into the attachment hole of the workpiece. The inward extending parts 23 of the elastic latching pieces 15 are formed in undercut shapes by an undercut molding process. As already noted, by "undercut molding process" is meant the molding of convex or concave shapes which, in that as-is condition, when such molded products are being removed from metal dies in the course of molding plastic products or the like, are difficult to remove in the direction of die opening, and by "undercut shape" is meant a convex or concave shape that is difficult to remove in that direction of die opening. The elastic latching pieces 15, furthermore, as shown in Fig. 5, are cut out by a U-shaped slit 26 that is inverted relative to the main body of the bushing shank 14, so that they are connected only at the free end 21 of the bushing shank 14 and elastically flex outward or inward in lateral directions, in a condition wherein the latching shoulders 22 are protruding to the outside in lateral directions.

The bushing shank 14 is such that the portion thereof remaining after excluding the elastic latching pieces 15 and space 18 is formed as a highly rigid axial column, so that the bushing shank exhibits high rigidity and high shear-resisting strength and fills up the lateral cross-section of the attachment holes of the attaching member and the workpiece in order to provide high securing strength. In the portions of the elastic latching pieces 15 where the latching shoulders 22 are formed, latching walls 29 (cf. Figs. 4 and 6) are formed [for] latching on the edge of the latching hole in the center of a spacer 27 as shown in Fig. 6.

In the flange 13 as shown in Fig. 5, a pair of latching pawls 30 is formed which protrude elastically inward from the inner wall surfaces where the hole 19 is formed, for mating or engaging with the pair of latching recesses 10 and the pair of latching parts 11 of the pin shank 9. The latching recesses 10 and the latching pawls 30 constitute latching means for effecting the provisionally latched condition by which, when [the fastener] is in the condition wherein the pin shank 9 that has been inserted into the space 18 (or into the hole 19) is positioned so as not to have reached the inward extending parts 23 of the elastic latching pieces 15, the pin 2 and the bushing 3 are connected. By the provisionally latched condition as shown in Fig. 5, the fastener, comprising the two parts of the pin 2 and the bushing 3, can be handled as a single part, and furthermore, the operation of attaching the workpiece and the attaching member is facilitated. The latching parts 11 and the latching pawls 30 constitute latching means for maintaining the condition wherein the pin 2 is connected to the bushing 3 in the fully latched condition. The fully latched condition is a condition in which, as shown in Fig. 8, the inward extending parts 23 of the elastic latching pieces 15 are pushed out to the outside in lateral directions, and the workpiece is clamped by the flange 13 and the latching shoulders 22 of the elastic latching pieces 15. The latching pawls 30 of the bushing 3, furthermore, in the shown example are formed in the flange 13, but if the pin and bushing 3 are to be maintained in the provisionally latched condition and in the fully latched condition, they may be formed in the bushing shank 14, and as latching means, the combination of latching recesses, latching parts and latching pawls is moreover entirely discretionary.

The operation of securing the attachment part 5 of a curtain side air bag that is an attaching member to a body panel 6 that is a workpiece, using the fastener 1, shall now be described with reference to Figs. 6 to 8. In Fig. 6, the bushing shank 14 of the fastener 1 in the provisionally latched condition is inserted into the attachment hole 31 in the attachment part 5 of the curtain side air bag. Insertion is accomplished by holding the upright walls 17 of the flange 13 of the bushing 3 and pushing in, after which the bushing shank 14, as is, in the provisionally latched condition, will be inserted into the attachment hole 31, but because the pin shank 9 is not engaged with the inward extending parts 23 of the elastic latching pieces 15, the elastic latching pieces 15 can flex inside the space 18, that is, inward in lateral directions, upon which the latching shoulders 22 will engage the back surface of the attachment part 5. In this way, the attachment part 5 will be clamped between the flange 13 and the elastic latching pieces 15, and the fastener 1 will be provisionally latched to the attachment part 5. The fastener 1 can easily be provisionally latched to the attachment part 5 of the curtain side air bag merely by the simple operation of inserting the bushing shank 14 into the attachment part 5 of the curtain side air bag. Thus, a condition is rendered wherein the fastener 1 has been pre-attached to the attachment part 5 in the curtain side air bag. The attachment hole 31 of the attachment part 5, furthermore, is formed as a square hole so as to prevent the fastener 1 from turning about its axis relative to the attachment part 5. Also, a spacer 27 is provided between the body panel 6 and the attachment part 5 of the curtain side air bag. When the attachment hole of the spacer 27 is caused to be passed through by the portion of the bushing shank 14 that extends out from the attachment hole 31 of the attachment part 5, the edges of the attachment hole latch with the latching shoulders 22 of the elastic latching pieces 15 and with the latching walls 29 formed adjacent to the latching shoulders 22. The spacer 27 may be made of a metal or of plastic. The spacer 27 eliminates "wobble" between the body panel 6 and the attachment part 5 of the curtain side air bag and stabilizes the attachment. Also, because the condition in which the fastener 1 is attached to the attachment part 5 of the curtain side air bag in the provisionally latched condition is maintained, curtain side air bags with fasteners affixed thereto can be carried onto an automobile assembly line, the job of attaching the fastener can be eliminated from the line, and, on an automobile assembly line or the like, curtain side air bags can be positioned merely by passing the bushing shank 14 of the bushing a short way into a prescribed attachment hole in a body panel 6 so that the number of process steps on the line can be reduced.

Fig. 7 shows a condition midway through the [operation] of fully latching the bushing shank 14 of the bushing 3 in the attachment hole of the workpiece 6, such as a body panel, after bringing a curtain side air bag equipped with a fastener 1 onto an automobile assembly line or the like. When the bushing shank 14 is inserted into the attachment hole of the workpiece 6, the latching shoulders 22 can flex inward in lateral directions until the attachment hole can be passed through (cf. arrow 33 in Fig. 7). Because the gap 25 is provided between the elastic latching pieces 15 (cf. Fig. 4), the bushing shank 14 can be smoothly inserted into the attachment hole of the workpiece, so long as the condition is such that the pin shank 9 has not come up against the inward extending parts 23 of the elastic latching pieces 15.

Next, as indicated by arrow 34 in Fig. 8, the head 7 of the pin 2 is pushed in, and the pin shank 9 of the pin 2 is pushed into the space 18 in the bushing shank 14 of the bushing 3. By pushing the pin shank 9 of the pin 2 in, the latching recesses 10 are released from being mated with the latching pawls 30 of the bushing 3, the pin shank 9 descends, and the fully latched condition indicated by solid lines in Fig. 8 is attained. In the fully latched condition, the pin shank 9 is thoroughly inserted into the space 18 of the bushing 3, comes up against the inward extending parts 23 of the elastic latching pieces 15 of the bushing 3, pushes the inward extending parts 23 out to the outside in lateral directions and causes the latching shoulders 22 to protrude farther to the outside in lateral directions. Furthermore, in the fully latched condition, the latching pawls 30 of the bushing shank 14 engage the latching parts 11 of the pin shank 9, whereupon the fully latched condition is maintained. To cause the pin shank 9, which consists of a rigid rod-shaped member, to transition from the provisionally latched condition to the fully latched condition, it is only necessary to press the head 7 in, which can be easily done with a light force pushing inward. In the fully latched condition, the inward extending parts 23 are pushed out to the outside in lateral directions, and the latching shoulder 22 portions corresponding thereto are made to protrude farther to the outside in lateral directions. As a consequence, the force by which the latching shoulders 22 latch on the edge of the attachment hole of the body panel 6 is strengthened, and the force resisting the bushing 3 from being pulled away from the body panel 6, that is, the pull-out resisting force, is strengthened. The spacer 27, by elastic pieces 35, eliminates "wobble" between the curtain side air bag and the body panel 6 and stabilizes the attachment. By selecting the thickness of the spacer 27, moreover, the attachment thickness when attaching the curtain side air bag to the body panel 6 can also be suitably adjusted. Furthermore, for the removal operation, if the head 7 of the pin 2 is pulled up, the fully latched condition can be released and the provisionally latched condition transitioned to; in the provisionally latched condition, as shown in Fig. 7, the fastener 1, in the condition wherein the attachment part 5 and spacer 27 are still held, can then be removed from the body panel 6. In the latching pawls 30 as shown in Fig. 5, tapered parts are formed below the projecting parts that are for engagement, so that during the removal operation, the engagements between the latching pawls 30 and the latching parts 11 can be released.

## Claims

1. A fastener (1) comprising two parts, namely: a pin (2) having a head (7) and a pin shank (9) extending from that head; and a bushing (3) having a flange (13) and a bushing shank (14) extending from that flange; a hole (19) is provided in said flange (13) for accepting said pin shank (9); a space (18) in said bushing shank (14) is provided for accepting said pin shank (9) which has passed through said hole (19); the fastener being secured to a workpiece by said pin shank (9) being inserted into said hole (19) and said space (18); wherein:
a pair of elastic latching pieces (15) is provided in said bushing shank (14), which latching pieces (15) extend outward in lateral directions from the free end of said bushing shank (14) toward said flange (13) to positions adjacent to that flange, so as to be in opposition with said space (18) therebetween; each of said elastic latching pieces (15) has a latching shoulder (22) for latching on the edge of an attachment hole of the workpiece, said latching shoulder (22) being formed in a portion that extends outward in said lateral directions; said elastic pieces (15) are shaped so as to latch on the edge of the attachment hole of the workpiece, so that,
when said bushing shank (14) is inserted into the attachment hole of the workpiece, said workpiece is clamped between said flange (13) and the elastic latching pieces (15);
in each of said elastic latching pieces (15) respectively, on the side of said space (18) and in the portion that is at a position corresponding to said latching shoulder, an inward extending part (23) is formed, which extends out toward the center of said space (18) in the condition in which said pin shank (9) is not inserted into that space; and
said pin shank (9) when it is inserted and passed through said space (18) being adapted to come up against said inward extending parts (23) and push said inward extending parts (23) out to the outside in lateral directions, after which pushing said latching shoulders (22) are made to protrude to the outside in lateral directions, so that the force wherein said latching shoulders (22) latch on the edge of the attachment hole of the workpiece is made stronger.

2. The fastener according to claim 1, wherein the inward extending parts (23) of said pair of elastic latching pieces (15) are in opposition across a gap (25), in the condition wherein said pin shank (9) is not inserted into said space (18); and said gap (25) is of such a width that, when said bushing shank (9) is inserted into the attachment hole of the workpiece, said latching shoulders (22) can flex inward in lateral directions and the attachment hole can be passed through.

3. The fastener according to claim 1 or 2, wherein said inward extending parts (23) of said elastic latching pieces (15) are formed in an undercut shape by an undercut molding process, and the width of said space (18) between said elastic latching pieces (15) is narrowed by said inward extending parts (23).

4. The fastener according to any one of claims 1 to 3, wherein in said pin shank (9) and in either said bushing shank (9) or said flange (13) latching means (30) are provided for effecting a provisionally latched condition with said pin (2) and said bushing (3) being connected in a condition where said pin shank (9), inserted into said hole (19), has not reached said inward extending parts (23) of said elastic latching pieces (15).

5. The fastener according to claim 4, wherein when said pin shank (9) in said provisionally latched condition is pushed farther into the space (18) in said bushing shank (14), said inward extending parts (23) of said elastic latching pieces (15) are pushed out to the outside in lateral directions, resulting in a fully latched condition wherein the clamping of the workpiece by said flange (13) and said latching shoulders (22) of said elastic latching pieces (15) is maintained.

6. The fastener according to claim 5, wherein in said pin shank (9) and in said flange (13) or said bushing shank (14), latching means (30) are provided for maintaining a condition wherein said pin (2) is connected to said bushing (3) in said fully latched condition.
